Europäisches Patentamt

European Patent Office

Office européen des brevets

(19)

(11) Publication number: **0 060 709 B1**

(12) # EUROPEAN PATENT SPECIFICATION

(45) Date of publication of patent specification: **09.09.87**

(51) Int. Cl.⁴: **G 01 N 30/90**

(21) Application number: **82301314.9**

(22) Date of filing: **15.03.82**

(54) **Method and system for multi-dimensional real-time chromatography.**

(30) Priority: **17.03.81 US 244743**

(43) Date of publication of application:
**22.09.82 Bulletin 82/38**

(45) Publication of the grant of the patent:
**09.09.87 Bulletin 87/37**

(84) Designated Contracting States:
**AT BE CH DE FR GB IT LI NL SE**

(56) References cited:
**CH-A- 442 804**
**DE-A-1 498 678**
**US-A-3 522 792**
**US-A-3 635 345**
**US-A-4 065 384**
**JOURNAL OF CHROMATOGRAPHY, vol. 174, 1979, pages 75-81, Amsterdam (NL);**
**JOURNAL OF CHROMATOGRAPHY, vol. 174, 1979, pages 75-81, Amsterdam (NL); E. TYIHAK et al.: "New planar liquid chromatographic technique: overpressured thin-layer chromatography".**

(73) Proprietor: **VAREX CORPORATION**
**11600 Nebel Street Suite 127**
**Rockville, MD 20852 (US)**

(72) Inventor: **Beauer, Lois Ann**
**12512 VILLAGE Square Terrace Apt 201**
**ROCKVILLE MARYLAND 20852 (US)**
Inventor: **Guiochon, Georges Anore**
**5 BD Montparnasse**
**F-75006 PARIS (FR)**

(74) Representative: **Wilson, Nicholas Martin et al**
**WITHERS & ROGERS 4 Dyer's Buildings Holborn**
**London EC1N 2JT (GB)**

(56) References cited:

**Methoden der Analytischen Chemie, Verlag Chemie (1974) S. 51-53, 79, 175**

Courier Press, Leamington Spa, England.

## Description

This application relates to multi-dimensional multi-phase chromatography employing real-time detection. More particularly it relates to such chromatography employing fluid separation of an unknown's constituents, particularly thin layer chromatography, with at least the second dimensional, second phase, separation performed by continuous overpressured thin-layer chromatography with novel real-time multiple linear array detection means.

A three dimensional scheme according to the invention is also disclosed.

Use of the two-dimensional system employing real-time detection permits separation of as many as five hundred to one thousand components of an unknown depending on the size of the chromatographic plate and the use of data processing means to process the data and present it in convenient form.

Background Art

Recently two-phased thin layer chromatography has come into use. In this method a plate is covered with silica gel. In single phase chromatography, an unknown is placed on the plate and the plate is placed in a beaker containing enough solvent to wet the lower edge of the plate. As the solvent climbs up the silica gel layer on the plate by capillary attraction, it moves the sample along with it. However, the different constituents of the sample having different affinities for the silica gel, are separated. The development is stopped when the first constituent reaches the top of the plate. The plate is dried. The constituents can be detected as spots at different positions on the silica gel. The silica gel may also be treated in various ways: e.g., so that it is polar, in which case non-polar solvents may be utilized; or vice versa; or it may be coated with certain molecules having specific affinities for the suspected unknowns. Thus the unknowns may be separated by their polar properties, by their molecular weights or by certain chemical affinities.

In two-phased two-dimensional thin-layer chromatography the chromatographic plate is coated in a strip along one edge with one form of treated or untreated silica gel and along the rest of the plate with a different form of treated or untreated silica gel. The plate is first developed along the strip by placing an edge perpendicular thereto into a beaker of appropriate solvent to separate the unknown into a linear array of constituents. After drying the plate is placed into another beaker of another solvent along the edge parallel to the linear array of constituents and they are developed up the plate to form a planar array of subconstituents. An example of such two-dimensional thin layer chromatography is disclosed in U.S. Application 4065384.

After drying, in order to analyze the plate, these sub-constituents must be detected and their position on the plate, and density, measured either by eye or by automatic means. Such means are expensive, and due to the spread out nature of the spots of the sub-constituents on the plate, are not very accurate.

Since there is no control of the speed of the solvent moving up the plate reproduceability is not good. This greatly limits the efficacy of this system of analysis. In terms of quantitative analysis (derived from density measurements) results better than 10 to 20% accuracy are very difficult to obtain.

Furthermore, the development of such thin-layer chromatographic plates is time consuming, taking up to several hours in each direction. Recently however pressurized thin-layer chromatography has come into use to try to avoid this time difficulty. In this system the solvent is forced through the thin layer of a retention medium by placing a cover plate over the thin layer of retention medium. This system has increased the speed of development.

A further prior proposal of two-dimensional thin layer chromatography is disclosed in Methoden des Analytischen Chemie, Bd. 1 (1974) at pages 51 to 53, 79 and 175 where various development methods are discussed. However, in that proposal a sample, which may be introduced continuously, is developed either in a countercurrent method or in a crossflow method by conventional separation.

In the Journal of Chromatography, Vol. 174 (1979), pages 75—81 there is disclosed a technique of chromatography where developing fluid is forced through a thin-layer chromogram. However, in that arrangement, the development is one-dimensional and evaluation of the developed plates is accomplished by means of a conventional chromatogram spectrophotometer.

According to one aspect of the present invention there is provided a method of two-dimensional chromatography comprising:

(a) chromatographically separating a sample of unknown composition into a one-dimensional first array of constituents in a thin layer chromatographic bed;

(b) chromatographically separating said constituents into a two-dimensional second array of sub-constituents in a direction transverse to the first array; and

(c) detecting said sub-constituents characterized in that the separation of said constituents into the second array of sub-constituents is performed by forcing a fluid under pressure through the bed in said direction, and the detection of said sub-constituents is performed as they flow past fixed positions on said bed in said direction by means producing a detection signal.

The invention also includes a method of three-dimensional chromatography comprising:

(a) chromatographically separating sample of unknown composition into a one-dimensional first array of constituents;

(b) chromatographically separating said constituents into a two-dimensional second array of sub-constituents; and

(c) detecting said sub-constituents characterized in that the sub-constituents are further chromatographically separated into a three-dimensional third array of further sub-constituents by forcing a fluid under pressure in a direction across said sub-constituents of the two-dimensional array; and

(d) the detection of said further sub-constituents is performed as they flow past fixed positions in said direction.

In accordance with another aspect of the invention there is provided a multi-dimensional chromatographic system comprising:

(a) first means for chromatographically separating a sample of unknown composition into a first array of constituents;

(b) second means for further separating said constituents into a higher dimensional second array of constituents;

(c) third means for detecting said constituents characterized in that said second means is for forcing a fluid under pressure through said first array of constituents and the third means is for detecting the time and position of transit of said constituents past fixed positions spaced away from the initial position of the constituents in said second array and for producing a detection signal indicative thereof.

In the particular system and apparatus described, an unknown mixture is placed at one end of a strip of material utilizing a first retention mechanism and an appropriate solvent is forced through the strip which is placed under a cover plate so that the solvent is eluted out the other end of the strip until a first constituent reaches the end of the strip at which time the elution is stopped. Adjacent to the first strip is a two-dimensional thin layer of material having a second retention mechanism. The layer and strip which may be on a single plate are then placed under a cover plate and the appropriate solvent for the second retention mechanism is forced across the strip orthogonal to the array of constituents and eluted out the other side of the plate opposite the strip. A vacuum device may be attached to the eluting edge to aid in this process. The plate is either supplied with a transparent slit at the edge of the plate or a transparent slit is provided adjacent the edge through which the solvent elutes in a laminar fashion. In one embodiment of the invention the slit is illuminated with ultraviolet light and a multi-photo diode linear array on the other side of the slit detects the ultraviolet light. When a sub-constituent passes through the slit, it is detected by the diode array. The time and position of the detection is an indication of the nature of the sub-constituent and the amount of absorption is an indication of the quantity of the sub-constituent. The output from the diode array may be recorded on magnetic tape and processed by a computer in order to provide a pseudo-three-dimensional plot or cathode ray display in the form of mountain peaks of the sub-constituents arrayed on a two-dimensional flat plate. The position of the peaks indicates the nature of the constituent, and the volume of the mountain the quantity of the constituent.

Alternatively the computer may be programmed to provide a list of the components and their quantities.

In a three-dimensional form of the apparatus, the second dimensional development is ceased when the first sub-constituent reaches the edge of the plate. The plate is permeable and when dried, is placed against a cube of a material having a third retention mechanism and a third solvent is forced through the plate and through the cube. A vacuum device at the opposite side of the cube aids in the elution. Detection is effective through a transparent plane in the cube by tomagraphic means or a multiple array planar detector.

Those skilled in the art will understand that many different retention mechanisms may be utilized, chosen for their respective appropriateness to the unknown being analyzed. Furthermore, many different detectors may be employed, such optical detectors for detecting changes in the index of refraction, polarization rotation and the like. If the materials being analyzed are radioactive or are made radioactive, radiation detectors may be employed. Fluorescence detectors and detectors of any appropriate physical phenomena, such as hot wire or flame detectors, may be utilized.

The invention also contemplates that one or more of the separation steps may be carried out with a gas rather than a liquid. Thus the first step could be carried out by gas chromatography until the first constituent reached the edge of the packed linear column and the second orthogonal step carried out by eluting a gas through the two-dimensional plate-like column. Liquid and gas chromatography could be used alternately, either one first.

Each dimensional separation except the last can be carried out using conventional thin-layer chromatography without overpressure — the last dimensional separation utilizing overpressured fluid (gas or liquid) chromatography with a real-time multiple linear array detector (in the case of two-dimensional chromatography) or a real-time multiple planar array or tomagraphic detector (in the case of three-dimensional chromatography).

The preferred embodiments of the invention utilize real-time detection of constituents eluting over a period of time and provide output data which may be conveniently analyzed by means of digital computers. The present invention decreases the time required for analysis whilst providing for more accurate detection of constituents of an unknown.

Brief Description of the Drawings

For a fuller understanding of the nature and objects of the invention reference should be had to the following detailed description taken in connection with the accompanying drawings given by way of example in which:

FIGURE 1 is a top plan view of a two-dimensional thin layer chromatographic plate utilized in the invention;

FIGURE 2 is a diagrammatic view of over-pressured elution apparatus and real-time detection means utilized in the system and apparatus of the invention; and

FIGURE 3 is a diagrammatic view of a system and apparatus for automatic three-dimensional chromatography according to the invention.

The same reference characters refer to the same elements through the several views of the drawings.

Best Mode For Carrying Out the Invention

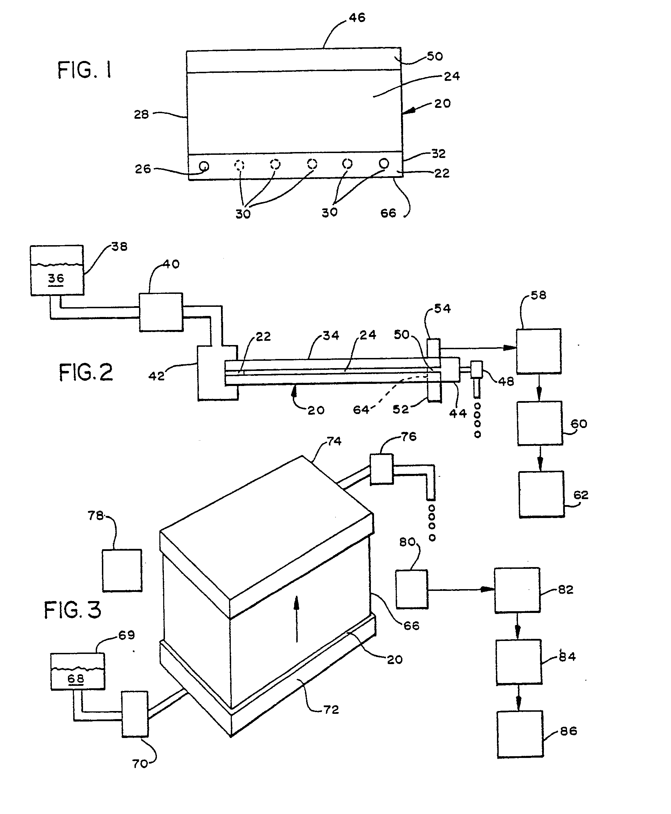

Now referring to FIGURE 1, a conventional two-dimensional bi-phase chromatographic plate 20 used in the invention may comprise a glass plate of which a first band or strip 22 of plain silica gel is affixed, the remaining portion of the plate 24 is also covered with silica gel; however, this has been treated to react the OH groups bonded to the silica with octadecyl ($C_{18}$) alkyl groups. Thus the strip 22 has a normal silica surface which is highly polar, and it interacts with components of the unknown by means of their polar groups. The surface 24 is alkyl-bonded silica which is poorly wetted by water, non-polar, and interacts essentially with the alkyl or carbon skeleton of the molecule.

The unknown 26 is placed at one end of the strip 22 and the edge 28 may be wetted by an appropriate non-polar or moderately polar solvent, like heptane or chloroform. The constituents of the unknown 26 will thus differentially move along the strip 22 and be separated into the constituents indicated by the dotted spots 30. When a dotted spot has reached edge 32 of plate 20 the development is stopped and the plate dried.

Now referring to FIGURE 2, the plate 20 is then inserted into apparatus for overpressured development. A cover plate 34 is provided in contact with the silica gel 24 and 22.

An appropriate solvent 36 for the retention mechanism of the alkyl bonded silica gel 24, such as water, methanol, acetonitrile, or mixtures thereof, is supplied from reservoir 38 to a pump 40 and from the pump 40 to a plenum chamber 42 which forces the solvent 36 through the strip 22 and the thin plate-like column of silica gel 24. The pressure in the plenum may be several (up to at least 15) atmospheres. A second plenum 44 at the edge 46 of plate 20 may be connected to a vacuum pump 48 to aid in the elution of the solvent 36 through the planar column of FIGURE 2. The solvents mentioned will move at an average rate of about one millimeter per second under these conditions.

Now referring to FIGURE 1, a strip 50 at edge 46 of plate 20 is preferably not covered with silica gel 24 and the plate is preferably of glass or quartz. This allows detection of the eluting components in FIGURE 2 by passing light through the glass or quartz cover plate 34 and through the transparent strip 50 of plate 20.

Light source 52 illuminates the eluting solvent 36 and components of the unknown and this is detected by detector 54 which may be a linear multi-photo diode array.

Since these arrays come in lengths of about $2\frac{1}{2}$ centimeters, and the conventional plates 20 are approximately 10 centimeters on an edge, an optical system (not shown) may be utilized to focus the image of the strip 50 onto the detector 54. The detector, which may have several thousand diodes, is connected to an analog-to-digital converter and commutator 58 which converts the outputs of each of the diodes to digital form and supplies them at frequent intervals, for example, ten times per second, to a multi-channel tape recorder 60. The rate at which the output of the diode array 54 is recorded by the tape recorder 60 depends of course upon the speed of elution of the solvent 36 and the components of the unknown. Under the conditions stated above each constituent peak is a spot 0.5 to 3 millimeters in diameter. It is preferred that this be fast enough so that a large enough number of readings of the rise and fall of the peak of each component being eluted is recorded so that an integration may be performed of the total size of the peak, thus giving an accurate indication of the quantity of the component. The literally millions of individual measurements recorded on the magnetic tape 60 are then supplied to a large digital computer 62 which converts data either to a pseudo-three-dimensional plot which simulates the components as mountain peaks on a two-dimensional plate, or a listing of components derived from previous test measurements with the quantity of each found, or to a two-dimensional chromatogram similar to a developed bi-phase plate.

The plate 20 of FIGURE 1 may be 5—20 centimeters square and the silica gel, layers 22 and 24 thereon, may be 1/10th to 1/4th of a millimeter thick. The plate 20 is thus conventional except for the transparent strip 50 along the top edge 46 thereof. When no such strip is provided the apparatus of FIGURE 2 may be provided with its own window as indicated at the dotted line 64.

The first development of the components 30 along the strip 22 may be performed as described by conventional thin-layer chromatography, or the apparatus illustrated in FIGURE 2 may be used, in which case an appropriate solvent 36 is forced into the edge 28 perpendicular to the strip 22 and the development continues until the first component is detected by the detector 54. The development is then stopped. The plate dried. Then the plate is again placed into the apparatus of FIGURE 2 with the lower edge 66 in the plenum 42.

It will be understood that the edges of the plate 20 and the cover plate 34, not within the plenum 42 or plenum 44, are sealed to prevent leaks.

The apparatus of FIGURE 2 may be thought of as many intercommunicating parallel chromatographic columns and in fact the solvent 36 need not be a liquid, but could be a gas and the apparatus of FIGURE 2 could operate by gas chromatography.

The light source 52 may be ultraviolet at 254 nanometers, in which case plate 34 and window 50 are quartz. Alternatively, there may be a plurality of light sources which are successively illuminated, such as 254, 280 and 350 nanometers, these wave lengths being chosen to be specifically absorbed by the unknown constituents being sought. The measurements at the three different wave lengths can then be utilized to make three superimposed plots on a TV screen, each in a different primary color. In this way constituents of an unknown mixture may be recognized by their colors in the three color presentation of the chromatogram.

Those skilled in the art will understand that the retention media 22 and 24 need not be conventional thin-layer chromatographic retention media in the apparatus of FIGURE 2, but may be any kind of stationary phase used in liquid chromatography, as for example gels used for gel or size exclusion chromatography. Also other means such as the application of electrical fields as used in electrophoresis, to induce separation of components of a mixture, may also be employed. Furthermore if gas chromatography is utilized, any of the well known packing materials utilized in packed gas chromatographic columns may be employed.

Many different forms of detection may be utilized in the apparatus of FIGURE 2 other than the straight densometry mentioned above. Conventional means may be employed for detecting the index of refraction of the eluting mixture. If the components fluoresce, fluorescence detection may be employed. The components may be radioactive or may be tagged with radioactive molecules, such as in various radioassay techniques, and the detector 54 may be a radioactivity detector. The components may be ions and the detector 54 may be an electro-chemical detector.

If the moving phase medium 36 is a gas, various detectors used in gas chromatography may be used, such as flame detectors or hot wire detectors.

Those skilled in the art will see that we have provided a method of greatly increasing the number of constituents which may be separated from an unknown mixture in less time and with a real time output capable of being analyzed by data processing techniques.

Depending on the size of plate and size of particles used to pack the column as well as packing qualities, the number of components that may be separated from a mixture according to the apparatus of FIGURE 2 may be as high as five hundred to one thousand in a single two-phased chromatographic analysis.

The system and apparatus of our invention may be generalized to three dimensions as illustrated in FIGURE 3. There the chromatographic plate 20 is not made of glass but of a porous substance. After being developed in the second dimension (that orthogonal to the strip 22) until the first component reaches the detector 54 development is stopped and the plate 20 is dried.

It is then placed against a cube 66 of a stationary phase of a third retention mechanism and then appropriate moving phase 68 for that retention mechanism is pumped from reservoir 69 by pump 70 through plenum chamber 72 into one face of the cube 66 and thence through the cube 66 in the direction of the arrow to the opposite face of the cube 66 and into an evacuation plenum 74 and vacuum pump 76. Of course the other faces of the cube are sealed by means not shown. Detection of the exiting components in a plane perpendicular to the arrow may be accomplished by a tomagraphic detector comprising a light source 78 rotating in the plane with detector 80. Information is fed to an analog-to-digital converter commutator 82 and then to magnetic tape recorded 84 and thence may be analyzed by a digital computer 86 in the same manner utilizing the same tomagraphic equations presently used in medical tomagraphy. Alternatively, a planar array detector may be incorporated into the plenum 74.

Utilizing the apparatus illustrated in FIGURE 3, as many as ten thousand components may be separated from a single unknown by a single three-dimensional chromatographic analysis.

It will thus be seen that the objects set forth above, among those made apparent from the preceding description, are efficiently attained and, since certain changes may be made in carrying out the above methods and systems and in the constructions set forth without departing from the scope of the invention, it is intended that all matter contained in the above description or shown in the accompanying drawing shall be interpreted as illustrative and not in a limiting sense.

Particularly, although we have discussed the first chromatographic development as producing a linear array of sub-components and the second dimensional chromatographic development as producing a planar array of sub sub-components, it will be understood by those skilled in the art that the first development is unidimensional and may be along a curve as well as a straight line, and the second development is two-dimensional and may be on a curved surface as well as a flat surface. Where we have described the use of multiple photo diode detectors, scanning detectors using flying spots, or cathode ray devices may also be employed. In fact any form of detector suitable to measure the quality of an unknown component being sought may be employed, such as electro-chemical detectors.

Where we have mentioned two or three retention media, it will be understood that the stationary phase may be the same in successive dimensional developments and the fluid phase changed, or vice versa, or the fluid and stationary phases may be different in each separate development. Other separation mechanisms known in the art may be employed such as adsorption chromatography in normal or reverse phase or electrophoresis.

**Claims**

1. A method of two-dimensional chromatography comprising:

(a) chromatographically separating a sample of unknown composition into a one-dimensional first array of constituents in a thin layer chromatographic bed;

(b) chromatographically separating said constituents into a two-dimensional second array of sub-constituents in a direction transverse to the first array; and

(c) detecting said sub-constituents characterized in that the separation of said constituents into the second array of sub-constituents is performed by forcing a fluid under pressure through the bed in said direction, and the detection of said sub-constituents is performed as they flow past fixed positions on said bed in said direction by means producing a detection signal.

2. A method of two-dimensional chromatography according to claim 1 comprising detecting said sub-constituents as they elute out of the chromatographic bed by means of a fixed multiple linear array detector aligned in a direction orthogonal to the fluid flow.

3. A method according to claims 1 or 2 in which each of said chromatographic separating steps is carried out using different retention mechanisms.

4. A method according to claim 1, 2 or 3 in which one or more of said chromatographic separating steps are carried out using liquid chromatography.

5. A method according to claim 3 in which one of said chromatographic separating steps is carried out using gas chromatography.

6. A method according to any one of the preceding claims characterized in that said detecting step is carried out by repeatedly recording a quality of said constituents as they flow past fixed positions.

7. A method according to claim 6 characterized in that said quality is optical absorption.

8. A method according to claim 7 characterized in that said detecting step is carried out by repeatedly recording the optical absorption of said components at a plurality of wave lengths.

9. A method of three-dimensional chromatography comprising:

(a) chromatographically separating sample of unknown composition into a one-dimensional first array of constituents;

(b) chromatographically separating said constituents into a two-dimensional second array of sub-constituents; and

(c) detecting said sub-constituents characterized in that the sub-constituents are further chromatographically separated into a three-dimensional third array of further sub-constituents by forcing a fluid under pressure in a direction across said sub-constituents of the two-dimensional array; and

(d) the detection of said further sub-constituents is performed as they flow past fixed positions in said direction.

10. A method of two- or three-dimensional chromatography for chromatographically separating constituents of a sample comprising:

(a) chromatographically separating a sample of unknown composition into a first array of constituents;

(b) chromatographically separating said constituents into a second array of sub-constituents in a direction transverse to the first array; and

(c) detecting said sub-constituents characterized in that the separation of said constituents into the first and the second array of sub-constituents is performed by forcing a fluid under pressure through the bed in the appropriate direction, and the detection of said sub-constituents is performed as they flow past fixed positions on said bed in said direction by means producing a detection signal.

11. A multi-dimensional chromatographic system comprising:

(a) first means (20) for chromatographically separating a sample of unknown composition into a first array (30) of constituents;

(b) second means for further separating said constituents into a higher dimensional second array of constituents;

(c) third means (54) for detecting said constituents characterized in that said second means (40, 42) is for forcing a fluid under pressure through said first array (30) of constituents and the third means (54) is for detecting the time and position of transit of said constituents past fixed positions spaced away from the initial position of the constituents in said second array and for producing a detection signal indicative thereof.

12. A multi-dimensional chromatographic system according to claim 11 characterized in that said first means (20) comprises a thin-layer chromatographic plate.

13. A multi-dimensional chromatographic system according to claims 11 or 12 characterized in that said second means comprises apparatus adapted for over-pressured thin-layer chromatography.

14. A multi-dimensional chromatographic system according to claim 13 characterized in that said second means elutes all of said higher dimensional array of constituents past said third means (54).

15. A multi-dimensional chromatographic system according to claims 11 or 12 characterized in that said second means elutes all of said higher dimensional array of constituents which are capable of moving past the third means (54).

16. A multi-dimensional chromatographic system according to claims 11 or 12 wherein the first means separates said constituents into a two-dimensional array and said second means comprises means (70, 72) for over-pressured fluid chromatography through a solid block retention medium (66).

17. A two-dimensional chromatographic system comprising:

(a) a two-dimensional chromatographic column (20) having an entrance edge and a thin sheet-like stationary phase therebetween; and

(b) means for chromatographically separating constituents of sample of unknown composition to cause them to be linearly disposed along said entrance edge of said column;

(c) characterised by means (40, 42) for forcing fluid under pressure through said column (20) in a direction orthogonal to said linearly disposed constituents (30); and

(d) means (54) for detecting the time and position at which said constituents exit said column.

18. A system according to claim 17 including a chromatographic plate (20) on which said chromatographic separation is accomplished comprising:

(a) a flat plate;

(b) a first area (22) adjacent the edge of said plate on a side of said plate covered with a layer of first chromatographic retention medium;

(c) a second area (24) adjacent said first area on said side of said plate covered with a layer of a second chromatographic retention medium; and

(d) a third area (50) adjacent said second area on said side of said plate not being optically obscured.

19. A system according to claim 18 characterized in that the first area (22) of said chromatographic plate is a rectangular strip, the second area (24) is a larger rectangle and the third area (50) is a rectangular strip.

20. A system according to claim 19 wherein said chromatographic plate (20) is made of glass.

21. A system according to claims 18 or 19 wherein said plate is made of glass.

22. A system according to claims 18 or 19 wherein said plate is made of porous material.

**Patentansprüche**

1. Verfahren der zweidimensionalen Chromatographie mit den Merkmalen:

(a) Chromatographisches Trennen einer Probe unbekannter Zusammensetzung in eine eindimensionale erste Gruppierung von Bestandteilen in einem chromatographischen Dünnschichtbett;

(b) chromatographisches Trennen der genannten Bestandteile in eine zweidimensionale zweite Gruppierung von Unterbestandteilen in einer zu der ersten Gruppierung quer verlaufenden Richtung; und

(c) Erkennen der genannten Unterbestandteile, dadurch gekennzeichnet, daß das Trennen der genannten Bestandteile in der zweiten Gruppierung von Unterbestandteilen mittels Hindurchpressen einer unter Druck stehenden Flüssigkeit in der genannten Richtung durch das Bett durchgeführt und das Erkennen der genannten Unterbestandteile durch Mittel zum Erzeugen eines Erkennungssignals durchgeführt wird, während die Unterbestandteile an festgelegten Stellen des genannten Betts in der genannten Richtung vorbeiströmen.

2. Verfahren der zweidimensionalen Chromatographie nach Anspruch 1, umfassend das Erkennen der genannten Unterbestandteile, während sie aus dem chromatographischen Bett ausfließen, mittels eines fest angebrachten linearen Mehrreihendetektors, der in einer orthogonal zu der Flüssigkeitsströmung verlaufenden Richtung ausgerichtet ist.

3. Verfahren nach Anspruch 1 oder 2, bei dem jeder der genannten chromatographischen Trennungsschritte unter Anwendung unterschiedlicher Rückhaltemechanismen durchgefürt wird.

4. Verfahren nach Anspruch 1, 2 oder 3, bei dem einer oder mehrere der genannten chromatographischen Trennungsschritte unter Anwendung von Flüssigkeitschromatographie durchgeführt wird.

5. Verfahren nach Anspruch 3, bei dem einer der genannten chromatographischen Trennungsschritte unter Anwendung von Gaschromatographie durchgeführt wird.

6. Verfahren nach einem der vorangehenden Ansprüche, dadurch gekennzeichnet, daß der Schritt der Erkennens mittels wiederholter Aufzeichnung einer Eigenschaft der genannten Bestandteile durchgeführt wird, während diese an festgesetzten Stellen vorbeiströmen.

7. Verfahren nach Anspruch 6, dadurch gekennzeichnet, daß die genannte Eigenschaft die optische Absorption ist.

8. Verfahren nach Anspruch 7, dadurch gekennzeichnet, daß der genannte Schritt des Erkennens mittels wiederholter Aufzeichnung der optischen Absorption der genannten Komponenten bei einer Mehrzahl von Wellenlängen durchgeführt wird.

9. Verfahren der dreidimensionalen Chromatographie mit den Merkmalen:

(a) Chromatographisches Trennen einer Probe unbekannter Zusammensetzung in eine eindimensionale erste Gruppierung von Bestandteilen;

(b) chromatographisches Trennen der genannten Bestandteile in eine zweidimensionale zweite Gruppierung von Unterbestandteilen; und

(c) Erkennen der genannten Unterbestandteile, dadurch gekennzeichnet, daß die Unterbestandteile wiederum chromatographisch in eine dreidimensionale dritte Gruppierung von weiteren Unterbestandteilen getrennt werden, indem eine Flüssigkeit unter Druck in einer Richtung quer zu den genannten Unterbestandteilen der zweidimensionalen Gruppierung gepreßt wird; und

(d) das Erkennen der genannten weiteren Unterbestandteile wird durchgeführt, während diese an festgelegten Stellen in der genannten Richtung vorbeiströmen.

10. Verfahren der zwei- oder dreidimensionalen Chromatographie zum chromatographischen Trennen von Bestandteilen einer Probe, mit den Merkmalen:

(a) chromatographisches Trennen einer Probe unbekannter Zusammensetzung in eine erste Gruppierung von Bestandteilen;

(b) chromatographisches Trennen der genannten Bestandteile in eine zweite Gruppierung von Unterbestandteilen in einer zur ersten Gruppierung quer verlaufenden Richtung; und

(c) Erkennen der genannten Unterbestandteile, dadurch gekennzeichnet, daß das Trennen der genannten Bestandteile in die erste und die zweite Gruppierung von Unterbestandteilen durchgeführt wird, indem eine Flüssigkeit unter Druck durch das Bett in der geeigneten Richtung hindurchgepreßt wird, und daß das Erkennen der genannten Unterbestandteile mittels einer Einrichtung, die ein Erkennungssignal erzeugt, durchgeführt wird, während die Unterbestandteile an festgelegten Stellen des genannten Betts vorbei in der genannten Richtung strömen.

11. Mehrdimensionales chromatographisches System, mit den Merkmalen:

(a) erste Mittel (20) zum chromatographischen Trennen einer Probe unbekannter Zusammensetzung in eine erste Gruppierung (30) von Bestandteilen;

(b) zweite Mittel zum weiteren Trennen der genannten Bestandteile in eine höherdimensionale zweite Gruppierung von Bestandteilen;

(c) dritte Mittel (54) zum Erkennen der genannten Bestandteile, dadurch gekennzeichnet, daß die genannten zweiten Mittel (40, 42) zum Hindurchpressen einer Flüssigkeit unter Druck durch die genannte erste Gruppierung (30) von Bestandteilen und die dritten Mittel (54) dazu vorgesehen sind, um den Zeitpunkt und die Stelle des Durchgangs der genannten Bestandteile an festgelegten Stellen zu erkennen, die von der Ausgangsstelle der Bestandteile in der zweiten Gruppierung einen Abstand aufweisen, und um ein hierfür bezeichnendes Erkennungssignal zu erzeugen.

12. Mehrdimensionales chromatographisches System nach Anspruch 11, dadurch gekennzeichnet, daß die genannten ersten Mittel (20) eine chromatographische Dünnschichtplatte aufweisen.

13. Mehrdimensionales chromatographisches System nach Anspruch 11 oder 12, dadurch gekennzeichnet, daß die genannten zweiten Mittel ein für Überdruck-Dünnschicht-Chromatographie geeignetes Gerät aufweisen.

14. Mehrdimensionales chromatographisches System nach Anspruch 13, dadurch gekennzeichnet, daß die genannten zweiten Mittel die Gesamtheit der Bestandteile der genannten höherdimensionalen Gruppierung von Bestandteilen an den dritten Mitteln (54) vorbeiströmen lassen.

15. Mehrdimensionales chromatographisches System nach Anspruch 11 oder 12, dadurch gekennzeichnet, daß die genannten zweiten Mittel die Gesamtheit der Bestandteile der genannten höherdimensionalen Gruppierung von Bestandteilen, die bewegungsfähig sind, an den dritten Mitteln (54) vorbeiströmen lassen.

16. Mehrdimensionales chromatographisches System nach Anspruch 11 oder 12, bei dem die ersten Mittel die Bestandteile in eine zweidimensionale Gruppierung trennen und die genannten zweiten Mittel eine Einrichtung (70, 72) für Überdruck-Flüssigkeitschromatographie durch ein Rückhaltemedium (66) in Form eines Festblocks aufweisen.

17. Zweidimensionales chromatographisches System mit den Merkmalen:

(a) eine zweidimensionale chromatographische Säule (20) mit einer Eintrittskante und einer zwischenliegenden, dünnen, blattartigen, stationären Phase; und

(b) Mittel zum chromatographischen Trennen von Bestandteilen einer Probe unbekannter Zusammensetzung, um zu bewirken, daß diese linear längs der Eintrittskante der genannten Säule angeordnet werden;

(c) gekennzeichnet durch Mittel (40, 42) zum Hindurchpressen von Flüssigkeit unter Druck durch die genannte Säule (20) in einer zu den linear angeordneten Bestandteilen (30) orthogonal verlaufenden Richtung; und

(d) Mittel (54) zum Erkennen des Zeitpunkts und der Stelle des Austritts der genannten Bestandteile aus der Säule.

18. System nach Anspruch 17 mit einer chromatographischen Platte (20), auf der die genannte chromatographische Trennung bewirkt wird, mit den Merkmalen:

(a) eine ebene Platte;

(b) ein erster Bereich (22), der der Kante der genannten Platte auf einer Seite der genannten Platte benachbart ist, die mit einer Schicht eines ersten chromatographischen Rückhaltemediums bedeckt ist;

(c) einen zweiten Bereich (24), der dem genannten ersten Bereich auf der genannten Seite der genannten Platte benachbart und mit einer Schicht eines · zweiten chromatographischen Rückhaltemediums bedeckt ist; und

(d) einen dritten Bereich (50), der dem genannten zweiten Bereich auf der genannten Seite der genannten Platte benachbart und optisch nicht abgedunkelt ist.

19. System nach Anspruch 18, dadurch gekennzeichnet, daß der erste Bereich (22) der genannten chromatographischen Platte ein rechteckförmiger Streifen, der zweite Bereich (24) ein größeres Rechteck und der dritte Bereich (50) ein rechteckförmiger Streifen ist.

20. System nach Anspruch 19, bei dem die genannte chromatographische Platte (20) aus Glas gefertigt ist.

21. System nach Anspruch 18 oder 19, bei dem die genannte Platte aus Glas gefertigt ist.

22. System nach Anspruch 18 oder 19, bei dem die genannte Platte aus porösem Werkstoff gefertigt ist.

**Revendications**

1. Procédé de chromatographie en deux dimensions comprenant les différentes étapes consistant à:

a) séparer chromatographiquement un échantillon de composition inconnue en un premier réseau unidimensionnel d'éléments constitutifs sous forme d'un lit chromatographique en couche mince;

b) séparer chromatographiquement ces éléments constitutifs en un second réseau à deux dimensions de sous-éléments constitutifs, dans une direction transversale par rapport au premier réseau; et

c) détecter ces sous éléments constitutifs, procédé caractérisé en ce que la séparation des éléments constitutifs en second réseau de sous-éléments constitutifs, est effectuée en faisant passer de force un fluide sous pression dans la direction transversale à travers le lit, et en ce que la détection des sous-éléments constitutifs est effectuée par production d'un signal de détection lorsque ces sous-éléments constitutifs passent au-delà de positions déterminées sur le lit dans la direction transversale.

2. Procédé de chromatographie en deux dimensions selon la revendication 1, caractérisé en ce qu'il comprend l'étape consistant à détecter les sous-éléments constitutifs lorsqu'ils s'échappent du lit chromatographique, au moyen d'un réseau linéaire de détecteurs multiples fixe alignés dans une direction orthogonale au débit de fluide.

3. Procédé selon l'une quelconque des revendications 1 et 2, caractérisé en ce que chacune des étapes de séparation chromatographique est effectuée en utilisant des mécanismes de rétention différents.

4. Procédé selon l'une quelconque des revendications 1 à 3, caractérisé en ce que l'une (ou plusieurs) des étapes de séparation chromatographique est (sont) effectuée(s) par chromatographie liquide.

5. Procédé selon la revendication 3, caractérisé en ce que l'une des étapes de séparation chromatographique est effectuée par chromatographie gazeuse.

6. Procédé selon l'une quelconque des revendications précédentes, caractérisé en ce que l'étape de détection est effectuée en enregistrant de façon répétitive une qualité des éléments constitutifs lorsqu'ils passent au-delà des positions fixes.

7. Procédé selon la revendication 6, caractérisé en ce que cette qualité est l'absorption optique.

8. Procédé selon la revendication 7, caractérisé en ce que l'étape de détection est effectuée en enregistrant de façon répétitive l'absorption optique des éléments à un certain nombre de longueurs d'onde.

9. Procédé de chromatographie en trois dimensions comprenant les différentes étapes consistant à:

a) séparer chromatographiquement un échantillon de composition inconnue en un premier réseau unidimensionnel d'éléments constitutifs;

b) séparer chromatographiquement ces éléments constitutifs en un second réseau à deux dimensions de sous-éléments constitutifs d'ordre supérieur;

c) en faisant passer de force un fluide sous pression dans une direction traversant les sous-éléments constitutifs du réseau à deux dimensions; et

d) la détection des sous-éléments constitutifs d'ordre supérieur étant effectuée lorsque ceux-ci passent au-delà de positions fixes dans la direction ci-dessus.

10. Procédé de chromatographie à deux ou trois dimensions pour séparer chromatographiquement les éléments constitutifs d'un échantillon, comprenant les différentes étapes consistant à:

a) séparer chromatographiquement un échantillon de composition inconnue en un premier réseau d'éléments constitutifs;

b) séparer chromatographiquement les éléments constitutifs en un second réseau de sous-éléments constitutifs dans une direction transversale par rapport au premier réseau; et

c) détecter ces sous-éléments constitutifs; procédé caractérisé en ce que la séparation des éléments constitutifs dans les premier et second réseaux de sous-éléments constitutifs est réalisée en faisant passer de force un fluide sous pression à travers le lit dans la direction appropriée, et en ce que la détection des sous-éléments constitutifs est effectuée, lorsqu'ils passent au-delà de positions fixes sur le lit dans la direction ci-dessus, en produisant un signal de détection.

11. Système chromatographique multidimensionnel comprenant:

a) des premiers moyens (20) pour séparer chromatographiquement un échantillon de composition inconnue en un premier réseau (30) d'éléments constitutifs;

b) des seconds moyens pour séparer ces éléments constitutifs en un second réseau d'éléments constitutifs d'ordre supérieur;

c) des troisièmes moyens (54) pour détecter ces éléments constitutifs;

système caractérisé en ce que les seconds moyens (40, 42) sont utilisés pour faire passer de force un fluide sous pression à travers le premier réseau (30) d'éléments constitutifs et en ce que les troisièmes moyens (54) sont utilisés pour détecter l'instant et la position de transit des éléments constitutifs au-delà de positions fixes écartées de la position initiale des éléments constitutifs dans le second réseau, et pour produire un signal de détection indicatif de ceux-ci.

12. Système chromatographique multidimensionnel selon la revendication 11, caractérisé en ce que les premiers moyens (20) sont constitués par une plaque chromatographique en couche mince.

13. Système chromatographique multidimensionnel selon l'une quelconque des revendications 11 et 12, caractérisé en ce que les seconds moyens sont constitués par un appareil destiné à effectuer une chromatographie en couche mince en surpression;

14. Système chromatographique multidimensionnel selon la revendication 13, caractérisé en ce que les seconds moyens suppriment tous les éléments constitutifs du réseau d'ordre supérieur au-delà des troisièmes moyens (54).

15. Système chromatographique multidimensionnel selon l'une quelconque des revendications 11 et 12, caractérisé en ce que les seconds moyens suppriment tous les éléments constitutifs du réseau d'ordre supérieur qui sont capables de se déplacer au-delà des troisièmes moyens (54).

16. Système chromatographique multidimensionnel selon l'une quelconque des revendications 11 et 12, caractérisé en ce que les premiers moyens séparent les éléments constitutifs en un réseau à deux dimensions, et en ce que les seconds moyens comprennent des moyens (70, 72) de chromatographie fluide en surpression à travers un bloc solide d'agent de rétention (66).

17. Système chromatographique en deux dimensions, comprenant:

a) une colonne chromatographique à deux dimensions (20) comportant un bord d'entrée et une phase stationnaire en forme de feuille mince entre les deux; et

b) des moyens pour séparer chromatographiquement les éléments constitutifs d'un échantillon de composition inconnue pour les amener à se disposer linéairement le long du bord d'entrée de la colonne;

c) caractérisé en ce qu'il comprend des moyens (40, 42) pour faire passer de force le fluide sous pression à travers la colonne (20) dans une direction orthogonale aux éléments constitutifs disposés linéairement (30); et

d) des moyens (54) destinés à détecter l'instant et la position auxquels les éléments constitutifs sortent de la colonne.

18. Système selon la revendication 17, comprenant une plaque chromatographique (20) sur laquelle se fait la séparation chromatographique, système caractérisé en ce qu'il comprend:

a) une plaque plate;

b) une première zone (22) adjacente au bord de la plaque d'un côté de la plaque recouvert par une couche d'un premier agent de rétention chromatographique;

c) une seconde zone (24) adjacente à la première zone du côté de la plaque recouvert par une couche d'un second agent de rétention chromatographique; et

d) une troisième zone (50) adjacente à la seconde zone du côté de la plaque qui n'est pas obscurci optiquement.

19. Système selon la revendication 18, caractérisé en ce que la première zone (22) de la plaque chromatographique est une bande rectangulaire, en ce que la seconde zone (24) est un rectangle plus grand et en ce que la troisième zone (50) est une bande rectangulaire.

20. Système selon la revendication 19, caractérisé en ce que la plaque chromatographique (20) est en verre.

21. Système selon l'une quelconque des revendications 18 et 19, caractérisé en ce que la plaque est en verre.

22. Système selon l'une quelconque des revendications 18 et 19, caractérisé en ce que la plaque est en matériau poreux.

FIG. I

FIG. 2

FIG. 3